# EUROPÄISCHE PATENTSCHRIFT

(11) **EP 3 067 604 B1**
(45) Veröffentlichungstag und Bekanntmachung des Hinweises auf die Patenterteilung: **04.04.2018**
(21) Anmeldenummer: 16000101.2
(22) Anmeldetag: 16.01.2016
(51) Int. Cl.: F16K 37/00, F16K 15/02

(54) **RÜCKSCHLAGVENTIL**
RETURN VALVE
CLAPET ANTI-RETOUR

(30) Priorität: 11.03.2015 DE 102015003095
(43) Veröffentlichungstag der Anmeldung: 14.09.2016
(73) Patentinhaber: Hydac Fluidtechnik GmbH, 66280 Sulzbach/Saar (DE)
(72) Erfinder: Bill, Markus, 66265 Heusweiler (DE); Hettinger-Bartholome, Dennis, 66583 Spiesen-Elversberg (DE)
(74) Vertreter: Bartels und Partner, Patentanwälte

(56) Entgegenhaltungen:
- EP-A2- 2 151 671
- DE-A1-102008 062 301
- DE-A1-102012 014 250
- DE-C2- 3 001 458
- US-A1- 2013 289 940

## Beschreibung

Die Erfindung betrifft ein Rückschlagventil mit den Merkmalen im Oberbegriff von Anspruch 1.

Dahingehende Rückschlagventile (WO 2005/098284 A2) sind häufig federbelastete Sitzventile, die den Durchfluss in einer Richtung gestatten und in entgegengesetzter Richtung blockieren oder sperren. Sofern solche Rückschlagventile entsperrbar ausgebildet sind, ermöglichen sie es, die genannte Sperrung zwischen den fluidführenden Anschlussstellen durch Einleiten eines genügend hohen Steuerdruckes am Ventil aufzuheben.

Dahingehende Rückschlagventile, auch in entsperrbarer Form, sind grundsätzlich Bestandteil von hydraulischen Ansteuerkreisen für Maschinen und Anlagen, von denen grundsätzlich Gefahren für den Menschen respektive für die jeweilige Bedienperson ausgehen. Die tatsächlich bestehende Gefahr hängt dabei jeweils von der Art und Funktionsweise der Maschine ab, wobei als gefährlich eingestuft Pressen oder sonstige Hebe- und Senkanwendungen, auch bei mobilen Arbeitsmaschinen, gelten. In der Regel werden die genannten Maschinen mit elektrischen oder elektronischen Steuersystemen gesteuert und sicherheitstechnisch überwacht.

Durch die Einführung der sogenannten Maschinenrichtlinie, die seit dem 29. Dezember 2009 verbindlich anzuwenden ist, wird ein einheitliches Schutzniveau zur Unfallverhütung für Maschinen beim Inverkehrbringen derselben innerhalb des europäischen Wirtschaftsraumes im Einzelnen geregelt. Dabei verdrängt das europäisch harmonisierte Recht zusehends die einzelstaatlichen, nationalen Bestimmungen zum Inverkehrbringen von solchen Maschinen.

Es hat sich nun gezeigt, dass bei Ausfall von Rückschlagventilen der genannten Art bisher der Fachwelt kein Instrumentarium zur Verfügung stand, mit dem es verlässlich möglich gewesen wäre, eine Ausfallsituation unmittelbar festzustellen, um dergestalt gefahrbringende Maschinen und Anlagenteile außer Kraft, respektive außer Funktion, zu setzen.

Zwar ist in der DE 30 01 458 C2 bereits ein gattungsgemäßes Rückschlagventil vorgeschlagen worden mit einem zwischen einer Ein- und Auslassöffnung axial durchströmten Ventilgehäuse, einem mit einem Sitz im Gehäusekanal zusammenarbeitenden Ventilkolben, der in Schließrichtung federbelastet ist, und einem länglichen Fortsatz auf der dem einlassseitigen Druck zugekehrten Seite des Ventilkolbens, der sich mit einem zylindrischen Abschnitt von gegenüber der Einlassöffnung reduziertem Durchmesser in die Einlassöffnung hinein erstreckt, wobei ein mit dem Ventilkolben verbundener, auf dessen Auslassseite angeordneter Magnet und ein in Bezug auf das Ventilgehäuse fest angeordneter, auf die Magnetbewegungen ansprechender Schalter einer Anzeigevorrichtung als Überwachungseinrichtung Positionen des Ventilkolbens überwacht. Der Ventilkolben weist an seiner freien Stirnseite eine zylindrisch ausgebildete Führung auf. Diese zylindrische Führung geht dann direkt in eine konische Schrägfläche über, an die sich eine Umfangsnut anschließt, in der ein Dichtung angeordnet ist. Der Umfangsnut folgt ein wiederum ein zylindrischer Abschnitt des Ventilkolbens. Die bekannte Lösung lässt Wünsche offen, wenn es darum geht, bei kleinen Volumenströmen durch das Ventil, wie sie beispielsweise bedingt durch Leckagen am Ventilsitz auftreten können, diese durch die Überwachungseinrichtung nicht unmittelbar als Fehler auszuweisen. Dergestalt ist das bekannte Rückschlagventil von seiner Funktion her zeitlich direkt schaltstellungsüberwacht, und es detektiert Öffnungszustände des Ventils als gefährlich, die zum Abschalten angeschlossener hydraulischer Kreise nebst Maschineneinrichtungen führen, die gar nicht gefährlich sind und eine Abschaltung an sich nicht notwendig machen.

Weitere Rückschlagventile gehen aus der DE 10 2008 062 301 A1, der US 2013/0289940 A1 und der EP 2 151 671 A2 hervor. Ein Steigventil wird durch die DE 10 2012 014 250 A1 aufgezeigt.

Ausgehend von diesem Stand liegt daher der Erfindung die Aufgabe zugrunde, für Rückschlagventile der genannten Art ein Instrumentarium zur Verfügung zu stellen, das sicherstellt, dass nur bei einem tatsächlichen Ausfall solcher Rückschlagventile gefahrbringende Maschinen- und Anlagenteile unmittelbar außer Funktion gesetzt werden.

Eine dahingehende Aufgabe löst ein Rückschlagventil mit den Merkmalen des Patentanspruches 1 in seiner Gesamtheit.

Gemäß dem Kennzeichen von Anspruch 1 ist vorgesehen, dass die Führung unter Zwischenschalten einer vertieft ausgeführten Umfangsnut in eine konische Schrägfläche übergeht, die mit korrespondierend ausgebildeten Anlageflächen im Ventilgehäuse den sitzdichten Ventilsitz ausbildet.

Durch den zunächst vorliegenden kleinen Schieberbereich am Ventilkolben nach Freigabe des Ventilsitzes fließt zunächst ein sehr kleiner Volumenstrom, der, wie bei diesen Ventilen üblich, im Bereich des Leckagefluidstromes liegt. Dieser soll zwecks Ausschluss von Fehlfunktionen betreffend die Überwachungseinrichtung nicht detektiert werden. Erst wenn sich der Ventilkolben weit genug gegen die Druckfeder bewegt hat und das Ventil mithin vollständig in regelnder Weise öffnet, indem es die beiden Fluidanschlussstellen fluidführend miteinander verbindet und der mithin vom Druck der Druckfeder abhängige Volumenstrom zwischen den Anschlussstellen fließt, soll die Überwachungseinrichtung "anspringen" und ein Messsignal an die Mess-Spulenanordnung über die bewegte Sensorstange weiterleiten.

Dadurch, dass erst nach Zurücklegen einer vorgebbaren Wegstrecke des Ventilkolbens nach Abheben vom Ventilsitz durch eine Messanordnung ein Signal an die Überwachungseinrichtung gerichtet ist, ist sichergestellt, dass die Überwachungseinrichtung erst dann anspricht, wenn der Ventilkolben um eine relevante Wegstrecke von seinem Ventilsitz im Ventilgehäuse abgehoben und dabei vorzugsweise den Durchfluss des vollen Volumenstroms freigegeben hat. Durch den zunächst vorliegenden kleinen Schieberbereich durch Verfahren des Ventil-Kegelkolbens in Richtung seiner Öffnungsstellungen fließt am Ventilsitz nur ein sehr kleiner Volumenstrom vorbei, der auch ausschließlich leckagebedingt sein kann und der von der Überwachungseinrichtung nicht zwingend als Fehlerquelle angegeben werden muss. Vielmehr soll erst, wenn das Ventil komplett öffnet, sprich der Ventilkolben gegen die Druckfeder als Energiespeicher und Rückstellelement gedrückt wird und sich mithin der druckabhängige, eingeregelte Volumenstrom einstellt, die Überwachungseinrichtung sicher ansprechen, um für den Fall, dass es sich hierbei um eine Fehlfunktion des jeweils genannten Rückschlagventils handelt, es zu einer verlässlichen Erkennung der dahingehenden Fehlerquelle kommt und der angeschlossene hydraulische Kreis für die jeweilige Arbeitsmaschine oder die daran angeschlossenen Maschinenteile durch die übergeordnete Maschinen- oder Anlagesteuerung stillgesetzt wird. Dergestalt lassen sich die von der jeweiligen Geräteeinrichtung ausgehenden Gefahren ausschließen. Dies hat so keine Entsprechung im Stand der Technik.

Die angesprochenen Ventile sind von ihrer Funktion her zeitlich direkt schaltstellungsüberwacht und ein gefahrbringender Ausfall kann frühzeitig detektiert werden, wobei vorzugsweise über die Überwachungseinrichtung nur eine Schnittstelle zur Steuerung bzw. zu der Logik der Maschine oder des jeweiligen Anlageteiles besteht. Durch geeignete vorgeschaltete Tests kann die Funktion der Maschine geprüft und überwacht werden, bevor diese ihren eigentlichen Betrieb aufnimmt. Durch die schaltstellungsüberwachten Rückschlagventile, die auch als Lasthalteventile eingesetzt werden können, wird der Diagnosedeckungsgrad erhöht, weil die jeweilige Funktion des Ventils entsprechend geprüft werden kann. Wird dahingehend der Diagnosedeckungsgrad durch zusätzliche Diagnosemaßnahmen, hier die direkte Überwachung der Ventilfunktion, erhöht, kann bei gleicher Ausführungsarchitektur der Maschine oder der Anlagenteile ein höherer "Performance-Level" (= zulässiges Gefährdungspotential für die Maschine) erreicht werden.

Mit der erfindungsgemäßen Schaltstellungsüberwachung des Ventilkolbens ist erreicht, dass dessen geöffnete und geschlossene Stellung sicher überwacht werden kann, und sollte es zu einem unzulässigen oder ungewollten Öffnen der fluidführenden Verbindung zwischen den Anschlussstellen im Ventilgehäuse kommen, kann die Überwachungseinrichtung dies detektieren und im Rahmen der Gesamtsteuerung der Maschine oder der Anlagenteile dieselbe(n) abschalten. Dergestalt lässt sich wesentlich das Gefährdungspotential für Menschen, insbesondere in Form von Bedienpersonen sowie Montage- und Wartungspersonal deutlich reduzieren. Insbesondere lässt sich dergestalt die angesprochene europäische Maschinenrichtlinie einhalten.

In Weiterausgestaltung der erfindungsgemäßen Lösung ist vorgesehen, dass der Ventilkolben mit einer Sensorstange mit Weicheisenkern verbunden ist, die für den Erhalt eines Messsignals mit einer Messspulenanordnung der Überwachungseinrichtung zusammenwirkt oder mit einem Hall-Sensor derselben.

Die Messspulenanordnung ist als induktiver Endlagenschalter konzipiert. Hierbei tauscht ein magnetisch leitender Werkstoff in eine Spule ein, wodurch sich die Induktivität der Spule messbar ändert. Die genannte Messspule ist Teil eines elektrischen Schwingkreises. Erreicht die Position des Kerns (Induktivität) einen einstellbaren Wert, hört der Schwingkreis auf zu schwingen. Dieser Punkt wird detektiert und als Schaltpunkt verwendet. Es wird mithin keine Position/Weg als physikalische Größe ausgegeben, sondern ein logisches Signal, welches man aber aufgrund der mechanischen Konstruktion einer Position zuordnen kann.

Um einen Messweg auszugeben, kann die Messspulenanordnung auch Bestandteil eines linear variablen Differential-Transformators (LVDT) sein. Laut Wikipedia-Eintrag (Stand: Dezember 2014) wird ein solcher spezieller Differential-Transformator im Rahmen der Wegmessung auch englisch als Linear Variable Differential Transformer, abgekürzt LVDT, bezeichnet. Die dahingehende Transformatoranordnung besteht in der Regel aus einer Primärspule und zwei Sekundärspulen. Letztere sind in gegenphasige Reihe geschaltet, dadurch subtrahieren sich die Spannungen an ihren Anschlüssen. Die resultierende Spannung ist genau dann Null, wenn die beiden Spulen und die gesamte Konstruktion symmetrisch aufgebaut sind. Wird die Symmetrie gestört, so entsteht eine Ausgangsspannung, deren Phase in Bezug zur Erregung (Primärspannung) in Richtung und deren Wert die Größe der Asymmetrie angibt. Der lineare Messbereich solcher Differentialtransformatoren liegt zwischen ±0,5 m und ± 1 mm, wobei Feinzeiger, die nach diesem Prinzip arbeiten, in der Regel eine Messgenauigkeit mit einer Auflösung von etwa 1 *µ*m haben können.

Sofern alternativ zum vorstehend Genannten für die Überwachungseinrichtung ein Hall-Sensor zum Einsatz kommt, ist die Sensorstange des Ventilkolbens als magnetfelderzeugende Einrichtung auszubilden, beispielsweise in Form eines Stabmagneten mit Nord-Süd-Ausrichtung der Magnetfeldlinien. Ein einfach aufgebauter Hall-Sensor wird von einem Strom durchflossen und in ein dazu vorzugsweise senkrecht dazu verlaufendes Magnetfeld gebracht, hier erzeugt durch den Stabmagneten der Sensorstange. Der Hall-Sensor liefert dann dahingehend eine Ausgangsspannung, die proportional zum Produkt aus magnetischer Feldstärke B und Strom I ist (Hall-Effekt). Der Vorteil des Hall-Sensors ist, dass er auch dann ein Signal liefert, wenn das Magnetfeld, in dem er sich befindet, konstant ist. Dies ist ein entscheidender Vorteil im Vergleich zu einem Sensorsystem, das wie vorstehend beschrieben aus einer Sensorstange mit Weicheisenkern und Spule besteht. Sobald bei dieser Paarung der Magnet respektive der Weicheisenkern nicht relativ zu der Spulenanordnung oder einer Einzelspule bewegt wird, ist die in der Spule induzierte Spannung Null und der Magnet kann nicht erkannt werden (vgl. Wikipedia, Stand Dezember 2014).

Im Folgenden wird die erfindungsgemäße Lösung anhand zweier Ausführungsbeispiele nach der Zeichnung näher erläutert. Dabei zeigen in prinzipieller und nicht maßstäblicher Darstellung die
- Fig. 1: einen Längsschnitt durch ein Rückschlagventil mit Schaltstellungsüberwachung; sowie die
- Fig. 2 und 3: in vergrößerter Wiedergabe den in Fig. 1 mit X umfassten Kreis, wobei die Fig. 2 die geschlossene und die Fig. 3 die geöffnete Ventilstellung betrifft;
- Fig. 4: eine der Fig. 3 entsprechende Längsschnittdarstellung, wobei das Rückschlagventil entsperrbar ausgeführt ist;
- Fig. 5 und 6: vergrößerte Darstellungen des in Fig. 4 umfassten und mit Y bezeichneten Kreises, einmal in geschlossener bzw. geöffneter Ventilstellung; und
- Fig. 7: den prinzipiellen Aufbau eines sogenannten Hall-Sensors in perspektivischer Ansicht (Quelle: Wikipedia, Stand Dezember 2014).

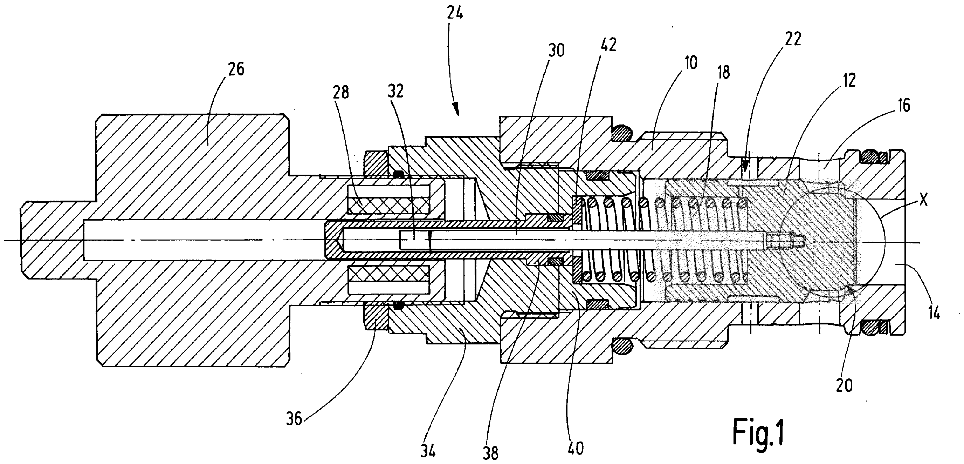

Das Rückschlagventil gemäß der Längsschnittdarstellung nach der Fig. 1 weist ein Ventilgehäuse 10 als Einschraubpatrone respektive in Cartridge-Bauweise auf. Innerhalb des Ventilgehäuses 10 ist längsverfahrbar ein Ventilkolben 12 geführt, der in seiner in der Fig. 1 gezeigten geschlossenen Stellung zwei Fluidanschlussstellen 14, 16 voneinander separiert oder sperrt. Der Ventilkolben 12 stützt sich dabei mit seinem hinteren freien Ende an einem Energiespeicher in Form einer Druckfeder 18 ab. Übersteigt der Druck an der Fluidanschlussstelle 14 den Schließdruck der Druckfeder 18, hebt der Ventilkolben 12 von seinem Ventilsitz 20 als Ganzes im Ventilgehäuse 10 ab und gibt eine fluidführende Verbindung zwischen den beiden Anschlussstellen 14, 16 dergestalt frei, dass Fluid unter Druck von der Anschlussstelle 14 zum Anschluss 16 gelangen kann. Über eine als Ganzes mit 22 bezeichnete Fluidkanalführung, die mit der weiteren Fluidanschlussstelle 16 medienführend in Verbindung steht, ist der Ventilkolben 12 insoweit druckausgeglichen geführt und ermöglicht einen hemmnisfreien Betrieb, sobald an der Anschlussstelle 14 ein höherer Druck anliegt als der Druck der Schließ- oder Druckfeder 18.

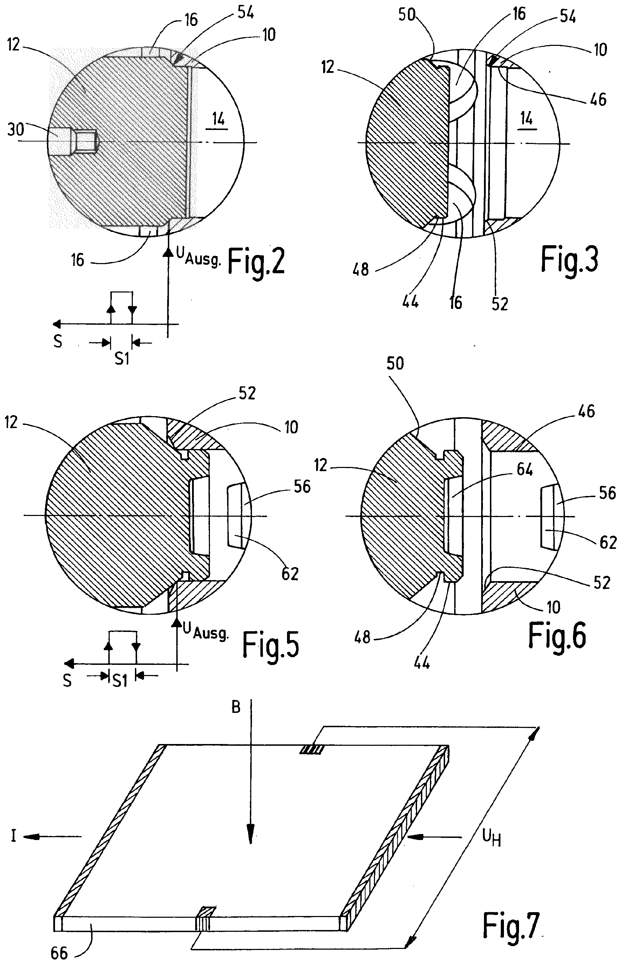

An das Ventilgehäuse 10 schließt sich in Blickrichtung auf die Fig. 1 gesehen linksseitig ein Teil einer als Ganzes mit 24 bezeichneten Überwachungseinrichtung mit ihren Gehäuseteilen 26 an. In dem als Einschraubteil ausgebildeten Gehäuseteil 26 ist eine Messspulenanordnung 28 aufgenommen. Bei Schaltung des Ventils macht die Sensorstange 30 den gleichen Hub wie der Ventilkolben12. Durch die damit einhergehende Verschiebung des Weicheisen-Kerns 32 ändern sich die induzierten Spannungen in der zweigteilten Messspulenanordnung 28. Dies wird von der Auswerteelektronik in an sich bekannter und daher nicht mehr näher beschriebener Weise aufgenommen und als externes Signal ausgegeben und weiterverarbeitet. In der Regel macht der Ventilkolben 12 erst einen gewissen Hub bevor das Signal des Positionssensors kommt und das Ventil geöffnet ist. Beim Schließvorgang des Ventils kommt das Signal entsprechend der Belegung PNP/NPN kurz vor Erreichen der damit in Verbindung stehenden Schließposition des Ventilkolbens 12. Dies ergibt die gewünschte Messgenauigkeit im Hinblick auf die Positionsüberwachung des Ventilkolbens 12. Die damit in Verbindung stehende Ausgangsspannung U_{Ausg.} ist in der Fig. 2 beispielhaft anhand eines mit Pfeilen wiedergegebenen Stufensignals aufgezeigt, wobei der Spannungsverlauf über der möglichen Wegstrecke s des Ventilkolbens 12 angegeben ist.

Als magnetisch leitender Werkstoff kann, wie bereits dargelegt, ein Weicheisen-Kern 32 dienen aber auch ein Ferritkern oder ein magnetisch leitender Stahl verwendet werden. Die Sensorstange 30 ist bevorzugt aus dem Werkstoff C45 aufgebaut. Der angesprochene Sensor in Form der Messspulenanordnung 28 hat insbesondere vier Anschlüsse (nicht dargestellt), wovon zwei Ausgänge eine Wechslerfunktion PNP plusschaltend haben. Mit der angesprochenen induktiven Sensoranordnung lässt sich gegenüber sonstigen Wegmesssystemen (LVDT) in kostengünstiger Weise die Position des Ventilkolbens 12 überwachen.

Das vorstehend genannte Wegmesssystem (LVDT) kann alternativ; aber nur zur Wegmessung für den Ventilkolben 12 eingesetzt werden, und hierfür weist die Messspulenanordnung 28 dann in an sich bekannter und daher nicht näher dargestellter Weise, beidseitig einer mittigen Erregerspule zwei Senkundärspulen in symmetrischer Anordnung auf. An der Primärspule liegt eine Wechselspannung mit konstanter Amplitude und konstanter Frequenzanordnung, die in der Regel eine Frequenz von 1 bis 10 kHz hat. Für die Realisierung der dahingehenden Messanordnung als LVDT-System weist der Ventilkolben 12 wiederum auf seiner rückwärtigen, linken Seite die Sensorstange 30 auf, die an ihrem linken freien Ende den Weicheisen-Kern 32 trägt.

Bewegt sich der Ventilkolben 12, bewegt sich auch wiederum die starr mit ihm verbundene Sensorstange 30, und der Weicheisenkern 32 kann die Kopplungsfaktoren zwischen den einzelnen Spulen verändern. Befindet er sich in der Neutralstellung oder Mittellage, so ist die Anordnung symmetrisch und die Spannung in den Sekundärspulen hebt sich auf, so dass kein Ausgangssignal entsteht, das dann als Anhalt dafür genommen wird, dass sich der Ventilkolben 12 in seiner in der Fig. 1 gezeigten Schließstellung befindet. Wird der Weicheisenkern 32 hingegen verschoben, beispielsweise in Blickrichtung auf die Fig. 1 gesehen nach links, was dem Öffnen des Ventilkolbens 12 gleichkommt, so liegt eine ungleich magnetische Kopplung vor, und es entsteht dadurch eine Ausgangsspannung an den Sekundärspulen mit der Folge, dass durch eine sinnfällige Korrelation mit der Erregerspannung sich ein Richtungssignal erzeugen lässt, was eine Aussage über die Position respektive die Schaltstellung des Ventilkolbens 12 ermöglicht. Der einfacheren Darstellung wegen sind die einzelnen Spulen in der Messspulenanordnung 28 zusammengefasst worden, und des Gleichen fehlen die elektrischen Kabelzuführungen für die Messspulenanordnung 28.

Das als Einschraubteil konzipierte Gehäuseteil 26 lässt sich in ein äußeres Gehäuseteil 34 des Ventilgehäuses 10 in vorgebbarer Weise einschrauben und mittels einer Kontermutter 36 definiert im Gehäuse 10 des Ventils festlegen, um dergestalt eine sinnfällige Längenanpassung zwischen Sensorstange 30 und Spulenanordnung 28 vornehmen zu können, so dass für jedes Ventil individuell genau die Anspringschwelle eingestellt werden kann, an der bei betätigtem Ventilkolben 12 die Spulenanordnung 28 zwecks Erhalt eines Spannungssignales anspricht. Zwischen Gehäuseteil 26 und Gehäuseteil 34 erstreckt sich in diesem Bereich abgedichtet eine an einem Ende abgeschlossene Innenhülse 38, die stationär angeordnet eine druckdichte Längsführung für die Sensorstange 30 ermöglicht. Das äußere Gehäuseteil 34 kann auch zweiteilig aufgebaut sein und stirnseitig in einen hülsenförmigen Fortsatz 40 übergehen, der sich mit einem entsprechenden Dichtungssatz versehen druckdicht an der Innenwandung des Ventilgehäuses 10 abstützt.

Der Ventilkolben 12 ist auf seiner Innenseite hohlgebohrt und bildet insoweit eine Führung für die Druckfeder 18 aus, die mit ihrem anderen, dem Ventilkolben 12 gegenüberliegenden Ende sich an einer Stützscheibe 42 abstützt, die von der Sensorstange 30 durchgriffen ist, die ebenso die Druckfeder 18 durchgreift, und während das eine freie Ende der Sensorstange 30 den Weicheisenkern 32 trägt, ist das andere Ende der Stange 30 über eine Einschraubstrecke fest mit dem Ventilkolben 12 verbunden.

Wie insbesondere die Figuren 2 und 3 zeigen, ist der Ventilkolben 12 an seinem rechten freien Ende, also an seinem freien stirnseitigen Bereich mit einer zylindrischen Führung 44 versehen, die sich im geschlossenen Zustand des Ventils (s. Fig. 2) an einer zylindrischen Innenwandfläche 46 im Ventilgehäuse 10 abstützt, die zumindest teilweise die Fluidanschlussstelle 14 mit begrenzt, die in Blickrichtung auf die Fig. 1 gesehen nach rechts aus dem Ventilgehäuse 10 herausführt. An die genannte zylindrische Führung 44 schließt sich eine vertieft ausgeführte Umfangsnut 48 an, an die sich wiederum eine konische Schrägfläche 50 mit etwa 45° Neigung als Teil des Ventilkolbens 12 anschließt. Nimmt der Ventilkolben 12 seine in der Fig. 2 dargestellte Schließstellung ein, liegt die dahingehende Schrägfläche 50 an einer korrespondierend schrägverlaufenden Anlagefläche 52 (s. Fig. 3) am Ventilgehäuse 10 an, wobei Schrägfläche 50 mit Anlagefläche 52 den eigentlichen sitzdichten Ventilsitz 54 für den Ventilkörper 12 ausbildet. Wie insbesondere die Fig. 3 zeigt, ist die Fluidanschlussstelle 14 als Axialbohrung in das Ventilgehäuse 10 eingebracht, wohingegen die Fluidanschlussstelle 16 aus mehreren Radialbohrungen im Ventilgehäuse 10 besteht. Wie insbesondere die Spannungsdarstellung nach der Fig. 2 zeigt, ist das beschriebene, hier bevorzugt eingesetzte induktive Endlagenschalter-Messsystem derart eingestellt, dass es erst auslöst, sprich ein Messsignal generiert, wenn der im stirnseitigen Bereich kegelförmig ausgeführte Ventilkolben 12 von seinem sitzdichten Ventilsitz 54 abgehoben hat. Durch den zunächst vorliegenden kleinen Schieberbereich am Ventilkolben 12 nach Freigabe des Ventilsitzes 54 fließt zunächst ein sehr kleiner Volumenstrom, der, wie bei diesen Ventilen üblich, im Bereich des Leckagefluidstromes liegt. Dieser soll zwecks Ausschluss von Fehlfunktionen betreffend die Überwachungseinrichtung 24 nicht detektiert werden. Erst wenn der Ventilkolben 12 weit genug gegen die Druckfeder 18 sich bewegt hat und das Ventil mithin vollständig in regelnder Weise öffnet, indem es die beiden Fluidanschlussstellen 14, 16 fluidführend miteinander verbindet und der mithin vom Druck der Druckfeder 18 abhängige Volumenstrom zwischen den Anschlussstellen 14, 16 fließt, soll die Überwachungseinrichtung 24 "anspringen" und ein Messsignal an die Mess-Spulenanordnung 28 über die bewegte Sensorstange 30 weiterleiten.

Wie der Spannungsverlauf nach der Fig. 2 angibt, soll also erst nach Zurücklegen einer vorgebbaren Wegstrecke s₁ des Ventilkolbens 12 vom Ventilsitz 54 die Messanordnung 28 ein Signal an eine übergeordnete Steuerung oder Auswerteeinheit der Überwachungseinrichtung 24 richten. Je nach Gesamtsituation für die hydraulisch an das Rückschlagventil nach der Fig. 1 angeschlossenen Maschinen- und Anlagenteile kann dann die übergeordnete Maschinensteuerung feststellen, ob die von der Überwachungseinrichtung 24 detektierte Signalabgabe dem üblichen Betriebszustand des Rückschlagventiles entspricht oder ob hier eine Fehlfunktion gegeben ist, indem eben ungewollt das Rückschlagventil geöffnet hat. Mit der erfindungsgemäßen Überwachungseinrichtung 24 ist es erstmals möglich geworden, Rückschlagventile von ihrer Schaltposition her zu überwachen. Dies hat so keine Entsprechung im Stand der Technik.

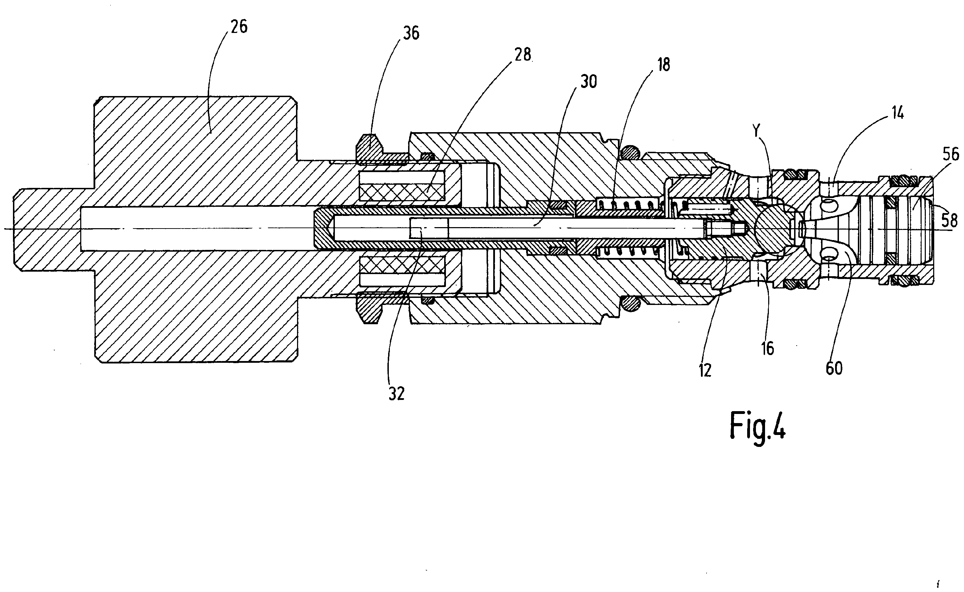

Die Ausführungsform nach den Figuren 4 bis 6 entspricht im Wesentlichen der vorstehend beschriebenen Ausführungsform nach den Figuren 1 bis 3, so dass die dahingehende Lösung nur noch insoweit beschrieben wird, als sie sich wesentlich von der vorangegangenen Ausführungsform unterscheidet. Bei der Ausgestaltung nach den Figuren 4 bis 6 handelt es sich um ein sogenanntes entsperrbares Rückschlagventil, das einen Entsperrkolben 56 aufweist, der mit seinem freien rechten, stirnseitigen Ende an eine weitere Fluidanschlussstelle 58 angrenzt, die durch das freie stirnseitige Ende des Ventilgehäuses 10 gebildet ist. Die Fluidanschlussstelle 14 ist nunmehr wie die Fluidanschlussstelle 16 über mehrere Bohrungen radial im Ventilgehäuse 10 angeordnet. Ferner mündet die Fluidanschlussstelle 14 über ihre Durchlassbohrungen radial in einen Innenraum 60 des Ventilgehäuses 10 ein, der randseitig neben den genannten Gehäuseteilen von der linken Stirnseite des Entsperrkolbens 56 ebenso begrenzt ist wie von der rechten Stirnseite des Ventilkolbens 12.

Für die normale Ventilfunktion wird wiederum unter dem Druck am Fluidanschluss 14 entgegen der Wirkung der Druckfeder 18 der Ventilkolben 12 in Blickrichtung auf die Fig. 4 gesehen von rechts nach links bewegt und die fluidführende Verbindung zu der weiteren Fluidanschlussstelle 16 freigegeben. In der entgegengesetzten Richtung, also von Anschlussstelle 16 nach Anschlussstelle 14, bleibt das Ventil in seiner in der Fig. 4 gezeigten geschlossenen Stellung; es sei denn, durch den an der weiteren Fluidanschlussstelle 58 anstehenden Druck wird der Entsperrkolben 56 von seiner in der Fig. 4 gezeigten rechten Anschlagstellung nach links bewegt, wobei er den Ventilkolben 12 derart aufstoßen kann, sprich entgegen der Wirkung der Druckfeder 18 von rechts nach links verschieben kann, dass der medienführende Weg zwischen Fluidanschlussstelle 16 zur Anschlussstelle 14 freigegeben ist, so dass dergestalt auch in umgekehrter Fluidrichtung der Fluid- oder Medienstrom das Ventil durchströmen kann. Eine dahingehend entsperrbare Rückschlagventilfunktion findet regelmäßig Anwendung bei sogenannten Senkbremsventilen.

Um eine sichere Führung zwischen den Kolben 12 und 56 zu gewährleisten, ist der Entsperrkolben 56 an seinem linken freien Ende in Stufen verjüngt ausgeführt, und das freie konische Ende 62 kann in eine entsprechend konisch ausgeführte Ausnehmung 64 am benachbart gegenüberliegenden Ende des Ventilkolbens 12 eingreifen. Ferner ist für eine linienförmige Sitzanlage im Bereich des Ventilsitzes 54 die Anlagefläche 52 am Ventilgehäuse 10 weniger steil ausgebildet als die korrespondierend dazu verlaufend angeordnete konische Schrägfläche 50 am Ventilkolben 12 (s. Fig. 5). Neben einigen geringfügigen Änderungen betreffend die Fluidkanalführung 22 sowie die Hülsenführung für die Sensorstange 30 und den Detailaufbau des Ventilkolbens 12, insbesondere in seinem rückwärtigen linken Bereich, ist aber die Messfunktion dieselbe wie vorstehend beschrieben für das Rückschlagventil nach den Figuren 1 bis 3. Insbesondere spricht die Messanordnung erst dann an, wenn der Ventilkörper 12 eine vorgebbare Wegstrecke s₁ zwischen seiner Leckagefluidöffnung und der voll geöffneten, geregelten Durchlassstellung zurückgelegt hat. Ferner ist die jeweilige Rückschlagventillösung nach den Figuren 1 und 4 als Cartridgeteil oder Einsetzpatrone ausgeführt, d.h., über das jeweils ausgeführte Führungs- und Dichtsystem kann das Ventil in nicht näher dargestellte Drittbauteile eingesetzt werden, das mit internen Fluidanschlussstellen versehen eine entsprechende Überdeckung mit den Anschlussstellen 14, 16 sowie gegebenenfalls der Anschlussstelle 58 erlaubt.

In der Fig. 7 ist stark vereinfacht und prinzipiell ein Hall-Sensor 66 dargestellt, der anstelle des sonst vorstehend vorgestellten Messsystems, treten kann. Die mit B bezeichnete magnetische Feldstärke wird durch die Sensorstange 30 hervorgerufen, die insoweit als Permanentmagnet respektive Stabmagnet auszubilden ist. Bewegt sich die Sensorstange 30 relativ zu dem Hall-Sensor 66 in senkrechter Richtung, ändert sich entsprechend die magnetische Feldstärke B, und der ansonsten von einem Ausgangsstrom I durchströmte Hall-Sensor liefert die von einer übergeordneten Maschinensteuerung zu berücksichtigende Messausgangsspannung U_{H}. Der Hall-Sensor 66 kann bevorzugt als sogenannter P-dotierter Halbleiterbaustein konzipiert sein. Auch insoweit lässt sich mit dem Hall-Sensor 66 wie vorstehend für das LVDT-Messsystem angegeben, ein zur Auswertung freigegebenes Messsignal erst dann angeben, wenn der jeweilige mit der Sensorstange 30 verbundene Ventilkolben 12 seine voll eingeregelte, volumenfreigebende Durchlassstellung zwischen den Fluidanschlussstellen 14, 16 erreicht hat.

## Patentansprüche

1. Rückschlagventil in Form eines direkt gesteuerten, federbelasteten Kegelsitzventiles, mit einem Ventilkolben (12), der in einem Ventilgehäuse (10) mit einem Ventilsitz (54) längsverfahrbar geführt ist und der entgegen der Wirkung eines Energiespeichers (18) in verschiedenen Schaltstellungen den fluidführenden Weg zwischen zwei Anschlussstellen (14, 16) im Ventilgehäuse (10) durch Abheben vom Ventilsitz (54) oder durch Anlegen an den Ventilsitz (54) freigibt bzw. voneinander sperrt, wobei mittels einer Überwachungseinrichtung (24) die einzelnen Schaltstellungen des Ventilkolbens (12) im Ventilgehäuse (10) überwacht sind, wobei erst nach Zurücklegen einer vorgebbaren Wegstrecke (s₁) des Ventilkolbens (12) nach Abheben vom Ventilsitz (54) durch eine Messanordnung (28) ein Signal an die Überwachungseinrichtung (24) gerichtet ist, wobei der Ventilkolben (12) an seiner freien Stirnseite eine zylindrisch ausgebildete Führung (44) aufweist, **dadurch gekennzeichnet, dass** die Führung (44) unter Zwischenschalten einer vertieft ausgeführten Umfangsnut (48) in eine konische Schrägfläche (50) übergeht, die mit korrespondierend ausgebildeten Anlageflächen (52) im Ventilgehäuse (10) den sitzdichten Ventilsitz (54) ausbildet.

2. Rückschlagventil nach Anspruch 1, **dadurch gekennzeichnet, dass** die Überwachungseinrichtung (24) erst dann anspricht, wenn der Ventilkolben (12) um die vorgebbare Wegstrecke (s₁) von seinem Ventilsitz (54) abgehoben, vorzugsweise den Durchfluss des vollen Volumenstroms freigibt, und dass bei sehr kleinen Volumenströmen am Ventilsitz (54), die regelmäßig auf Leckagen zurückgehen, die Überwachungseinrichtung (24) nicht anspricht.

3. Rückschlagventil nach Anspruch 1 oder 2, **dadurch gekennzeichnet, dass** der Ventilkolben (12) mit einer Sensorstange (30) verbunden ist, die für den Erhalt eines Messsignals mit einer Messspulenanordnung (28) der Überwachungseinrichtung (24) zusammenwirkt oder mit einem Hall-Sensor (66) derselben.

4. Rückschlagventil nach Anspruch 3, **dadurch gekennzeichnet, dass** die Sensorstange (30) für das Zusammenwirken mit der Messspulenanordnung (28) einen Weicheisenkern (32) oder für das Zusammenwirken mit dem Hall-Sensor (66) eine magnetfelderzeugende Einrichtung, insbesondere in Form eines Stabmagneten aufweist.

5. Rückschlagventil nach einem der vorstehenden Ansprüche, **dadurch gekennzeichnet, dass** die Messspulenanordnung (28) Bestandteil eines induktiven Endlagenschalter-Messsystems oder eines linear variablen Differential-Transformators (LVDT) ist.

6. Rückschlagventil nach einem der vorstehenden Ansprüche, **dadurch gekennzeichnet, dass** die Überwachungseinrichtung (24) erst dann anspricht, wenn der Ventilkolben (12) um eine vorgebbare Wegstrecke (s₁) von seinem Ventilsitz (20) abgehoben und den Durchfluss des voll eingeregelten Volumenstroms zwischen den Fluidanschlussstellen (14, 16) freigegeben hat.

7. Rückschlagventil nach einem der vorstehenden Ansprüche, **dadurch gekennzeichnet, dass** es entsperrbar derart konzipiert ist, dass ein von einem Fluiddruck an einer weiteren Fluidanschlussstelle (58) des Ventilgehäuses (10) beaufschlagter Entsperrkolben (56) den Ventilkolben (12) entgegen der Wirkung des Energiespeichers (18) in eine die fluidführende Verbindung zwischen den beiden anderen Anschlussstellen (14, 16) freigebende, eingeregelte Durchlassstelle verfährt.

8. Rückschlagventil nach Anspruch 3 oder 4, **dadurch gekennzeichnet, dass** die Sensorstange (30) den Energiespeicher (18) durchgreift, der zwischen dem Ventilkolben (12) und der Überwachungseinrichtung (24) angeordnet ist.

9. Rückschlagventil nach einem der vorstehenden Ansprüche, **dadurch gekennzeichnet, dass** die Überwachungseinrichtung (24) als Nachrüstsatz an bestehende Rückschlagventile anbringbar ist.

10. Rückschlagventil nach einem der vorstehenden Ansprüche, **dadurch gekennzeichnet, dass** es in Patronenbauweise ausgeführt mit Drittbauteilen durch Einsetzen in dieselben fluidführend verbindbar ist.

## Claims

1. A return valve in the form of a directly controlled, spring-loaded conical seat valve, comprising a valve piston (12) which is guided such as to be able to move longitudinally within a valve housing (10) with a valve seat (54) and which, against the effect of an energy accumulator (18), in different switching positions, clears or blocks the fluid-conveying path between two connection points (14, 16) within the valve housing (10) by lifting from the valve seat (54) or by resting against the valve seat (54), the individual switching positions of the valve piston (12) within the valve housing (10) being monitored by means of a monitoring device (24), a signal only being directed to the monitoring device (24) by a measuring arrangement (28) after covering a pre-definable stretch (s₁) of the valve piston (12) after lifting from the valve seat (54), the valve piston (12) having a cylindrically formed guide (44) on its free front side, **characterised in that** with the interposition of a recessed circumferential groove (48), the guide (44) merges into a conical inclined surface (50) which, with correspondingly formed contact surfaces (52) within the valve housing (10) forms the tightly seated valve seat (54).

2. The return valve according to Claim 1, **characterised in that** the monitoring device (24) only responds when the valve piston (12), lifted by the pre-definable stretch (s₁) from its valve seat (54), preferably allows the passage of the entire volumetric flow, and that with very small volumetric flows on the valve seat (54), which are generally due to leaks, the monitoring device (24) does not respond.

3. The return valve according to Claim 1 or 2, **characterised in that** the valve piston (12) is connected to a sensor rod (30) which, in order to obtain a measurement signal, interacts with a measuring coil arrangement (28) of the monitoring device (24) or with a Hall sensor (66) of the latter.

4. The return valve according to Claim 3, **characterised in that**, for the interaction with the measuring coil arrangement (28), the sensor rod (30) has a soft iron core (32) or, for the interaction with the Hall sensor (66), has a magnetic field-generating device, in particular in the form of a bar magnet.

5. The return valve according to any of the preceding claims, **characterised in that** the measuring coil arrangement (28) is a component part of an inductive final position switch measuring system or of a linearly variable differential transformer (LVDT).

6. The return valve according to any of the preceding claims, **characterised in that** the monitoring device (24) only responds when the valve piston (12) has lifted by a pre-definable stretch (s₁) from its valve seat (20) and has allowed the passage of the fully adjusted volumetric flow between the fluid connection points (14, 16).

7. The return valve according to any of the preceding claims, **characterised in that** it is designed to be unblockable such that a deblocking piston (56) to which fluidic pressure can be applied at another fluid connection point (58) of the valve housing (10) moves the valve piston (12) against the effect of the energy accumulator (18) into an adjusted passage point that allows the fluidic connection between the two other connection points (14, 16).

8. The return valve according to Claim 3 or 4, **characterised in that** the sensor rod (30) passes through the energy accumulator (18) which is disposed between the valve piston (12) and the monitoring device (24).

9. The return valve according to any of the preceding claims, **characterised in that** the monitoring device (24) can be attached to existing return valves as retrofit equipment.

10. The return valve according to any of the preceding claims, **characterised in that**, made in a cartridge design, it can be connected fluidically to third party components by inserting it into the latter.

## Revendications

1. Clapet anti-retour sous la forme d'un clapet à siège conique, commandé directement, soumis à l'action d'un ressort et ayant un piston (12) de clapet, qui est guidé avec possibilité de se déplacer longitudinalement, dans un corps (10) de clapet ayant un siège (54) de clapet et qui, à l'encontre de l'action d'un accumulateur (18) d'énergie en des positions de manoeuvre différentes, dégage ou sépare l'un de l'autre le trajet de conduite de fluide entre deux points (14, 16) de raccord dans le corps (10) de clapet par soulèvement du siège (54) de clapet ou par application au siège (54) de clapet, dans lequel au moyen d'un dispositif (24) de contrôle, les diverses positions de manoeuvre du piston (12) de clapet dans le corps (10) de clapet sont contrôlées, dans lequel seulement après avoir parcouru un tronçon (s1) de trajet pouvant être donné à l'avance du piston (12) de clapet, après soulèvement du siège (54) de vanne, un signal est envoyé par un agencement (28) de mesure au dispositif (24) de contrôle, le piston (12) de clapet, ayant sur son côté frontal libre, un guidage (44) constitué de manière cylindrique, **caractérisé en ce que** le guidage (44) se transforme, avec interposition d'une rainure (48) périphérique réalisée profonde, en une surface (50) inclinée conique, qui constitue, avec des surfaces (52) de contact constituées de manière correspondante dans le corps (10) de clapet, le siège (54) de clapet étanche par siège.

2. Clapet anti-retour suivant la revendication 1, **caractérisé en ce que** le dispositif (24) de contrôle ne réagit, que si le piston (12) de clapet est soulevé, du tronçon (S1) de trajet pouvant être donné à l'avance, de son siège (54) de clapet, de préférence dégage le débit de tout le courant en volume, et **en ce, que** pour des courants en volume très petits au siège (54) du clapet, qui proviennent d'une manière régulière de fuites, le dispositif (24) de contrôle ne réagit pas.

3. Clapet anti-retour suivant la revendication 1 ou 2, **caractérisé**
**en ce que** le piston (12) de clapet est relié à une tige(30) de capteur, qui, pour l'obtention d'un signal de mesure, coopère avec un agencement (28) à bobine de mesure du dispositif (24) de contrôle ou avec un capteur (66) Hall de celui-ci.

4. Clapet anti-retour suivant la revendication 3, **caractérisé en ce que** la tige (30) de capteur a, pour la coopération avec l'agencement (28) à bobine de mesure, un noyau (32) de fer doux ou, pour la coopération avec le capteur (66) Hall, un dispositif produisant un champ magnétique, notamment sous la forme d'un aimant à barreau.

5. Clapet anti-retour suivant l'une des revendications précédentes, **caractérisé en ce que** l'agencement (28) à bobine de mesure fait partie d'un système de mesure inductif à interrupteur de fin de course ou d'un transformateur différentiel variable linéairement (LVDT).

6. Clapet anti-retour suivant l'une des revendications précédentes, **caractérisé en ce que** le dispositif (24) de contrôle ne réagit que si le piston (12) de clapet est soulevé d'un tronçon (S1) de trajet pouvant être donné à l'avance de son siège (20) de clapet et à dégager le débit du courant en volume réglé complètement entre les points (14, 16) de raccord pour du fluide.

7. Clapet anti-retour suivant l'une des revendications précédentes, **caractérisé en ce qu'**il est conçu pilotable, de manière à ce qu'un piston (56) de pilotage, soumis à une pression de fluide sur un autre point (58) de raccord pour du fluide du corps (10) de clapet, déplace le piston (12) de clapet à l'encontre de l'effet du ressort (18) accumulateur, pour le mettre dans une position de passage régulé, dégageant la liaison fluidique entre les deux autres points (14, 16) de raccord.

8. Clapet anti-retour suivant la revendication 3 ou 4, **caractérisé en ce que** la tige (30) de capteur traverse l'accumulateur (18) d'énergie, qui est disposé entre le piston (12) de clapet et le dispositif (24) de contrôle.

9. Clapet anti-retour suivant l'une des revendications précédentes, **caractérisé en ce que** le dispositif (24) de contrôle peut être mis en rattrapage sur des clapets anti-retour existants.

10. Clapet anti-retour suivant l'une des revendications précédentes, **caractérisé en ce que**, réalisé en mode de construction en cartouche, il peut être relié fluidiquement à des pièces tiers par insertion dans celles-ci.
